# EUROPÄISCHE PATENTSCHRIFT

(11) **EP 1 554 544 B1**
(45) Veröffentlichungstag und Bekanntmachung des Hinweises auf die Patenterteilung: **28.06.2006**
(21) Anmeldenummer: 03809270.6
(22) Anmeldetag: 07.10.2003
(51) Int. Cl.: G01C 19/56

(54) **VERFAHREN ZUR ELEKTRONISCHEN ABSTIMMUNG DER AUSLESESCHWINGUNGSFREQUENZ EINES CORIOLISKREISELS**
METHOD FOR ELECTRONICALLY ADJUSTING THE READOUT OSCILLATION FREQUENCY OF A CORIOLIS GYRO
PROCEDE DE SYNTONISATION ELECTRONIQUE DE LA FREQUENCE D'OSCILLATION DE SORTIE D'UN GYROSCOPE VIBRANT

(30) Priorität: 18.10.2002 DE 10248735
(43) Veröffentlichungstag der Anmeldung: 20.07.2005
(73) Patentinhaber: LITEF GmbH, 79115 Freiburg (DE)
(72) Erfinder: SCHRÖDER, Werner, 77955 Ettenheim (DE)
(74) Vertreter: Müller, Frithjof E.
(86) Internationale Anmeldenummer: PCT/EP2003/011090
(87) Internationale Veröffentlichungsnummer: WO 2004/038333

(56) Entgegenhaltungen:
- WO-A-97/45699
- WO-A-99/19734

## Beschreibung

Die Erfindung betrifft ein Verfahren zur elektronischen Abstimmung der Frequenz der Ausleseschwingung auf die Frequenz der Anregungsschwingung bei einem Corioliskreisel.

Corioliskreisel (auch Vibrationskreisel genannt) werden in zunehmendem Umfang zu Navigationszwecken eingesetzt; sie weisen ein Massensystem auf, das in Schwingungen versetzt wird. Diese Schwingung ist in der Regel eine Überlagerung einer Vielzahl von Einzelschwingungen. Diese Einzelschwingungen des Massensystems sind zunächst voneinander unabhängig und lassen sich jeweils abstrakt als "Resonatoren" auffassen. Zum Betrieb eines Vibrationskreisels sind wenigstens zwei Resonatoren erforderlich: einer dieser Resonatoren (erster Resonator) wird künstlich zu Schwingungen angeregt, die im Folgenden als "Anregungsschwingung" bezeichnet wird. Der andere Resonator (zweiter Resonator) wird nur dann zu Schwingungen angeregt, wenn der Vibrationskreisel bewegt/gedreht wird. In diesem Fall treten nämlich Corioliskräfte auf, die den ersten Resonator mit dem zweiten Resonator koppeln, der Anregungsschwingung des ersten Resonators Energie entnehmen und diese auf die Ausleseschwingung des zweiten Resonators übertragen. Die Schwingung des zweiten Resonators wird im Folgenden als "Ausleseschwingung" bezeichnet. Um Bewegungen (insbesondere Drehungen) des Corioliskreisels zu ermitteln, wird die Ausleseschwingung abgegriffen und ein entsprechendes Auslesesignal (z. B. das Ausleseschwingungs-Abgriffsignal) daraufhin untersucht, ob Änderungen in der Amplitude der Ausleseschwingung, die ein Maß für die Drehung des Corioliskreisels darstellen, aufgetreten sind. Corioliskreisel können sowohl als Open-Loop-System, als auch als Closed-Loop-System realisiert werden. In einem Closed-Loop-System wird über jeweilige Regelkreise die Amplitude der Ausleseschwingung fortlaufend auf einen festen Wert - vorzugsweise null - rückgestellt.

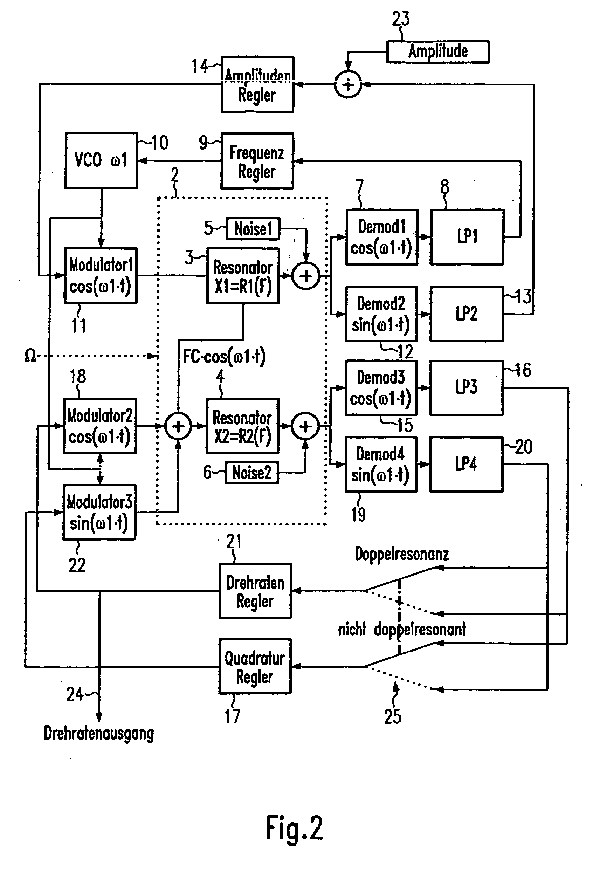

Im Folgenden wird zur weiteren Verdeutlichung der Funktionsweise eines Corioliskreisels unter Bezugnahme auf Figur 2 ein Beispiel eines Corioliskreisels in Closed-Loop-Ausführung beschrieben.

Ein solcher Corioliskreisel 1 weist ein in Schwingungen versetzbares Massensystem 2 auf, das im Folgenden auch als "Resonator" bezeichnet wird. Diese Bezeichnung ist zu unterscheiden von den oben erwähnten "abstrakten" Resonatoren, die Einzelschwingungen des "echten" Resonators darstellen. Wie bereits erwähnt, kann der Resonator 2 als System aus zwei "Resonatoren" (erster Resonator 3 und zweiter Resonator 4) aufgefasst werden. Sowohl der erste als auch der zweite Resonator 3, 4 sind jeweils an einen Kraftgeber (nicht gezeigt) und an ein Abgriffssystem (nicht gezeigt) gekoppelt. Das Rauschen, das durch die Kraftgeber und die Abgriffssysteme erzeugt wird, ist hier durch Noise 1 (Bezugszeichen 5) und Noise2 (Bezugszeichen 6) schematisch angedeutet.

Der Corioliskreisel 1 weist des Weiteren vier Regelkreise auf:

Ein erster Regelkreis dient zur Regelung der Anregungsschwingung (d.h. der Frequenz des ersten Resonators 3) auf eine feste Frequenz (Resonanzfrequenz). Der erste Regelkreis weist einen ersten Demodulator 7, ein erstes Tiefpassfilter 8, einen Frequenzregler 9, einen VCO ("Voltage Controlled Oscillator") 10 und einen ersten Modulator 11 auf.

Ein zweiter Regelkreis dient zur Regelung der Anregungsschwingung auf eine konstante Amplitude und weist einen zweiten Demodulator 12, ein zweites Tiefpassfilter 13 und einen Amplitudenregler 14 auf.

Ein dritter und ein vierter Regelkreis dienen zur Rückstellung derjenigen Kräfte, die die Ausleseschwingung anregen. Dabei weist der dritte Regelkreis einen dritten Demodulator 15, ein drittes Tiefpassfilter 16, einen Quadraturregler 17 und einen zweiten Modulator 18 auf. Der vierte Regelkreis enthält einen vierten Demodulator 19, ein viertes Tiefpassfilter 20, einen Drehratenregler 21 und einen dritten Modulator 22.

Der erste Resonator 3 wird mit dessen Resonanzfrequenz ω1 angeregt. Die resultierende Anregungsschwingung wird abgegriffen, mittels des ersten Demodulators 7 in Phase demoduliert, und ein demoduliertes Signalanteil wird dem ersten Tiefpassfilter 8 zugeführt, der daraus die Summenfrequenzen entfernt. Das abgegriffene Signal wird im Folgenden auch als Anregungsschwingungs-Abgriffsignal bezeichnet. Ein Ausgangssignal des ersten Tiefpassfilters 8 beaufschlagt einen Frequenzregler 9, der in Abhängigkeit des ihm zugeführten Signals den VCO 10 so regelt, dass die In-Phase-Komponente im Wesentlichen zu Null wird. Dazu gibt der VCO 10 ein Signal an den ersten Modulator 11, der seinerseits einen Kraftgeber so steuert, dass der erste Resonator 3 mit einer Anregungskraft beaufschlagt wird. Ist die In-Phase-Komponente Null, so schwingt der erste Resonator 3 auf seiner Resonanzfrequenz ω1. Es sei erwähnt, dass sämtliche Modulatoren und Demodulatoren auf Basis dieser Resonanzfrequenz ω1 betrieben werden.

Das Anregungsschwingungs-Abgriffsignal wird des Weiteren dem zweiten Regelkreis zugeführt und durch den zweiten Demodulator 12 demoduliert, dessen Ausgabe das zweite Tiefpassfilter 13 passiert, dessen Ausgangssignal wiederum dem Amplitudenregler 14 zugeführt wird. In Abhängigkeit dieses Signals und eines Soll-Amplitudengebers 23 regelt der Amplitudenregler 14 den ersten Modulator 11 so, dass der erste Resonator 3 mit einer konstanten Amplitude schwingt (d.h. die Anregungsschwingung weist eine konstante Amplitude auf).

Wie bereits erwähnt wurde, treten bei Bewegung/Drehungen des Corioliskreisels 1 Corioliskräfte - in der Zeichnung durch den Term FC·cos(ω1·t) angedeutet - auf, die den ersten Resonator 3 mit dem zweiten Resonator 4 koppeln und damit den zweiten Resonator 4 zum Schwingen anregen. Eine resultierende Ausleseschwingung der Frequenz ω2 wird abgegriffen, sodass ein entsprechendes Ausleseschwingungs-Abgriffsignal (Auslesesignal) sowohl dem dritten als auch dem vierten Regelkreis zugeführt wird. Im dritten Regelkreis wird dieses Signal durch den dritten Demodulator 15 demoduliert, Summenfrequenzen durch das dritte Tiefpassfilter 16 entfernt und das tiefpassgefilterte Signal dem Quadraturregler 17 zugeführt, dessen Ausgangssignal den dritten Modulator 22 so beaufschlagt, dass entsprechende Quadraturanteile der Ausleseschwingung rückgestellt werden. Analog hierzu wird im vierten Regelkreis das Ausleseschwingungs-Abgriffsignal durch den vierten Demodulator 19 demoduliert, durchläuft das vierte Tiefpassfilter 20, und ein entsprechend tiefpassgefiltertes Signal beaufschlagt einerseits den Drehratenregler 21, dessen Ausgangssignal proportional zur momentanen Drehrate ist und als Drehraten-Messergebnis auf einen Drehratenausgang 24 gegeben wird, und andererseits den zweiten Modulator 18, der entsprechende Drehratenanteile der Ausleseschwingung rückstellt.

Ein Corioliskreisel 1 wie oben beschrieben kann sowohl doppelresonant als auch nichtdoppelresonant betrieben werden. Wird der Corioliskreisel 1 doppelresonant betrieben, so ist die Frequenz w2 der Ausleseschwingung annähernd gleich der Frequenz ω1 der Anregungsschwingung, wohingegen im nichtdoppelresonanten Fall die Frequenz ω2 der Ausleseschwingung verschieden von der Frequenz ω1 der Anregungsschwingung ist. Im Fall der Doppelresonanz beinhaltet das Ausgangssignal des vierten Tiefpassfilters 20 entsprechende Information über die Drehrate, im nichtdoppelresonanten Fall dagegen das Ausgangssignal des dritten Tiefpassfilters 16. Um zwischen den unterschiedlichen Betriebsarten doppelresonant/nichtdoppelresonant umzuschalten, ist ein Doppelschalter 25 vorgesehen, der die Ausgänge des dritten und vierten Tiefpassfilters 16, 20 wahlweise mit dem Drehratenregler 21 und dem Quadraturregler 17 verbindet.

Wenn der Corioliskreisel 1 doppelresonant betrieben werden soll, muss - wie erwähnt - die Frequenz der Ausleseschwingung auf die Frequenz der Anregungsschwingung abgestimmt werden. Dies kann beispielsweise auf mechanischem Wege erfolgen, indem Material am Massensystem (dem Resonator 2) abgetragen wird. Alternativ hierzu kann die Frequenz der Ausleseschwingung auch mittels eines elektrischen Feldes, in dem der Resonator 2 schwingbar gelagert ist, also durch Änderung der elektrischen Feldstärke, eingestellt werden. Damit ist es möglich, auch während des Betriebs des Corioliskreisels 1 eine elektronische Abstimmung der Frequenz der Ausleseschwingung auf die Frequenz der Anregungsschwingung durchzuführen.

In der Druckschrift WO-A-9745699 ist ein Corioliskreisel beschrieben, mit dem sich die Frequenz der Ausleseschwingung auf die Frequenz der Anregungsschwingung durch Anlegen einer Gleichspannung auf die sensierenden Elektroden durchführen lässt. Weiter sei auf die Druckschrift WO-A-9919734 verwiesen, in der ein Corioliskreisel gezeigt ist, der eine Frequenzabstimmung durch Anlegen einer Kraft auf den Resonator ermöglicht.

Die der Erfindung zugrunde liegende Aufgabe ist es, ein Verfahren bereit zu stellen, mit dem in einem Corioliskreisel die Frequenz der Ausleseschwingung auf die Frequenz der Anregungsschwingung elektronisch abgestimmt werden kann.

Diese Aufgabe wird durch das Verfahren gemäß den Merkmalen des Patentanspruchs 1 gelöst. Ferner stellt die Erfindung einen Corioliskreisel gemäß Patentanspruch 6 bereit. Vorteilhafte Ausgestaltungen und Weiterbildungen des Erfindungsgedankens finden sich in jeweiligen abhängigen Ansprüchen .

Erfindungsgemäß wird bei einem Verfahren zur elektronischen Abstimmung der Frequenz der Ausleseschwingung auf die Frequenz der Anregungsschwingung in einem Corioliskreisel der Resonator des Corioliskreisels mittels einer Störkraft so beaufschlagt, dass a) die Anregungsschwingung im Wesentlichen unbeeinflusst bleibt, und b) die Ausleseschwingung so geändert wird, dass ein die Ausleseschwingung repräsentierendes Auslesesignal einen entsprechenden Störanteil enthält, wobei die Störkraft definiert ist als diejenige Kraft, die durch das Signalrauschen im Auslesesignal hervorgerufen wird. Die Frequenz der Ausleseschwingung wird hierbei so geregelt, dass die Grösse des in dem Auslesesignal enthaltenen Störanteils, d.h. der Rauschanteil, möglichst klein wird.

Unter "Resonator" wird hierbei das gesamte in Schwingung versetzbare Massensystem des Corioliskreisels verstanden - also der mit Bezugsziffer 2 gekennzeichnete Teil des Corioliskreisels. Wesentlich hierbei ist, dass die Störkräfte auf den Resonator lediglich die Ausleseschwingung, nicht jedoch die Anregungsschwingung ändern. Unter Bezugnahme auf Fig. 2 würde dies bedeuten, dass die Störkräfte nur den zweiten Resonator 4 beaufschlagen, nicht jedoch den ersten Resonator 3.

Eine der Erfindung zu Grunde liegende wesentliche Erkenntnis ist, dass ein Störsignal in Form von Signalrauschen, das direkt im Ausleseschwingungs-Abgriffssignal bzw. am Eingang der Regelkreise (Drehratenregelkreis/Quadraturregelkreis) auftritt, nach "Durchgang" durch die Regelkreise und den Resonator umso stärker im Ausleseschwingungs-Abgriffsignal beobachtbar ist, je weniger die Frequenz der Ausleseschwingung mit der Frequenz der Anregungsschwingung übereinstimmt. Das Signalrauschen, das das Signalrauschen der Ausleseschwingungs-Abgriffselektronik bzw. der random walk des Corioliskreisels ist, beaufschlagt nach "Durchlauf" durch die Regelkreise die Kraftgeber und erzeugt somit entsprechende Störkräfte, die den Resonator beaufschlagen und damit eine künstliche Änderung der Ausleseschwingung hervorrufen. Die "Durchschlagsstärke" einer derartigen Störung auf das Ausleseschwingungs-Abgriffsignal ist also, ein Mass dafür, wie genau die Frequenz der Ausleseschwingung mit der Frequenz der Anregungsschwingung übereinstimmt. Wenn man also die Frequenz der Ausleseschwingung so regelt, dass die Durchschlagsstärke ein Minimum annimmt, d.h. dass die Grösse des in dem Ausleseschwingungs-Abgriffsignal enthaltenen Störanteils, d.h. des Rauschanteils, minimal wird, so ist damit gleichzeitig die Frequenz der Ausleseschwingung auf die Frequenz der Anregungsschwingung abgestimmt.

Wie bereits erwähnt, ist das Störsignal durch niederfrequentes Drehratenrauschen des Ausleseschwingungs-Abgriffsignals bzw. der random walk des aufaddierten Drehratenwinkels gegeben. Das Störsignal wird also nicht künstlich erzeugt, sondern bereits vorhandene Störsignale (Rauschen der Ausleseschwingungs-Abgriffselektronik) genutzt. Es lässt sich zeigen, dass niederfrequentes Drehratenrausahen/der random walk des aufintegrierten Winkels bei Corioliskreiseln, die doppelresonant betrieben werden (also bei Übereinstimmung der Frequenzen von Anregungsschwingung und Ausleseschwingung), um Grössenordnungen geringer als bei nicht doppelresonanten Corioliskreiseln ist. Eine genaue Analyse zeigt, dass der Reduktionsfaktor nach einer von der Güte der Ausleseschwingung abhängigen Mindestzeit der halbe Wert der Güte dieser Schwingung ist.

Vorteilhaft ist, dass die Störung durch das Eigenrauschen des Corioliskreisels selbst gegeben ist, also keine künstlichen Störungen/Modulationen benötigt werden. Ein weiterer Vorteil ist, dass während der Frequenzabstimmung zwischen Anregungs- und Ausleseschwingung gleichzeitig der random walk des Corioliskreisels gemessen werden kann.

Vorteilhafterweise wird hierbei der Durchgang der Störung durch den Quadraturregelkreis beobachtet, da in diesem im Gegensatz zum Drehratenregelkreis kein niederfrequentes Rauschen auf Grund der Variation der Drehgeschwindigkeit auftritt. Nachteilig ist jedoch, dass bei Benutzung des Quadraturregelkreises der Abstimmungsprozess der Frequenz der Anregungsschwingung auf die Frequenz der Ausleseschwingung relativ lange dauert. Der Störanteil (Rauschanteil) wird also vorzugsweise aus einem Signal ermittelt, das an einem Quadraturregler des Quadraturregelkreises anliegt oder von diesem ausgegeben wird. Alternativ kann der Störanteil aus einem Signal ermittelt werden, das an einem Drehratenregler des Drehratenregelkreises anliegt oder von diesem ausgegeben wird.

Die Frequenzregelung der Ausleseschwingung, d.h. die Kraftübertragung der zur Frequenzregelung nötigen Regelkräfte erfolgt hierbei durch Regelung der Stärke eines elektrischen Felds, in dem ein Teil des Resonators schwingt, wobei eine elektrische Anziehungskraft zwischen dem Resonator und einem den Resonator umgebenden rahmenfesten Gegenstück vorzugsweise nichtlinear ist.

Die Erfindung stellt weiterhin einen Corioliskreisel bereit, der einen Resonator, eine Anregungseinheit, durch die der Resonator in Schwingungen versetzbar ist, sowie eine Ausleseeinheit, mit der ein die Ausleseschwingung repräsentierendes Auslesesignal erzeugbar ist, aufweist, und der gekennzeichnet ist durch eine Einrichtung zur elektronischen Abstimmung der Frequenz der Ausleseschwingung auf die Frequenz der Anregungsschwingung. Die Einrichtung zum elektronischen Abstimmen weist hierbei auf:

Eine Rauschdetektiereinheit, die den Rauschanteil eines Auslesesignals, das die Ausleseschwingung repräsentiert, ermittelt, und eine Regeleinheit, die die Frequenz der Ausleseschwingung so regelt, dass die Grösse des in dem Auslesesignal enthaltenen Rauschanteils möglichst klein wird.

Vorzugsweise ermittelt die Rauschdetektiereinheit den Rauschanteil aus einem Signal, das an einem Quadraturregler eines Quadraturregelkreises des Corioliskreisels anliegt oder von diesem ausgegeben wird. Eine weitere Alternative ist, den Rauschanteil aus einem Signal zu ermitteln, das an einem Drehratenregler eines Drehratenregelkreises des Corioliskreisels anliegt oder von diesem ausgegeben wird. In einer weiteren Alternative ermittelt die Rauschdetektiereinheit den Rauschanteil aus einem Ausleseschwingungs-Abgriffsignal, das durch einen Ausleseschwingungsabgriff erzeugt wird. Der Begriff "Auslesesignal" beinhaltet alle in diesem Abschnitt angeführten Signale.

Im Folgenden wird unter Bezugnahme auf die begleitenden Figuren die Erfindung in beispielsweiser Ausführungsform näher erläutert. Es zeigen:
Fig. 1 den schematischen Aufbau eines Corioliskreisels, der auf dem erfindungsgemässen Verfahren basiert;
Fig. 2 den schematischen Aufbau eines herkömmlichen Corioliskreisels.

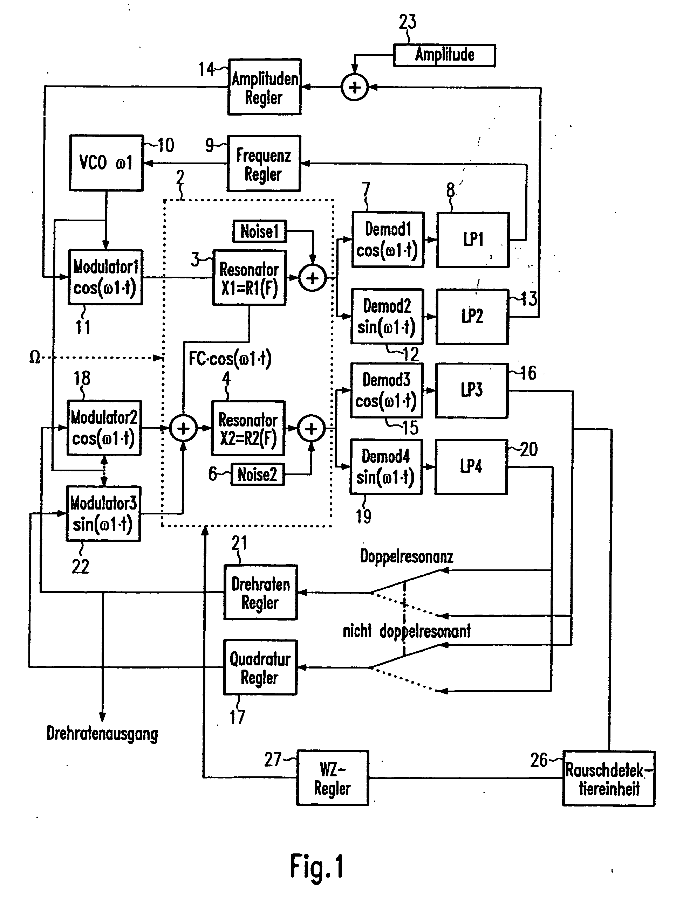

Zunächst wird unter Bezugnahme auf Fig. 1 das erfindungsgemäße Verfahren in beispielsweiser Ausführungsform näher erläutert. Dabei sind Teile bzw. Einrichtungen, die denen aus Fig. 2 entsprechen, mit den selben Bezugszeichen gekennzeichnet und werden nicht nochmals erläutert. Ein Corioliskreisel 1' ist zusätzlich mit einer Rauschdetektiereinheit 26 und einem Ausleseschwingungs-Frequenzregler 27 versehen.

Das Signalrauschen (Eigenrauschen) der Ausleseschwingungs-Abriffselektronik (hier durch Bezugszeichen 6 angedeutet) erzeugt ein Störsignal im Ausleseschwingungs-Abgriffsignal (Auslesesignal), das den beiden Regelkreisen (Quadraturregelkreis/Drehratenregelkreis) zugeführt wird. Nach Durchgang durch die Regelkreise beaufschlagt das Störsignal einen zweiten und dritten Modulator 18. 22, deren entsprechende Ausgabesignale jeweils einen Kraftgeber (nicht gezeigt) und damit den Resonator 2 beaufschlagen. Sofern die Frequenz der Ausleseschwingung nicht im Wesentlichen mit der Frequenz der Anregungsschwingung übereinstimmt, wird das Störsignal nach "Durchgang" durch den Resonator 2 in Form eines Störanteils des Ausleseschwingungs-Abgriffsignals beobachtet. Das Störsignal (Eigenrauschen) wird nun durch die Rauschdetektiereinheit 26 ermittelt, indem das Ausleseschwingungs-Abgriffsignal bzw. eines der Signale, die an dem Quadraturregler 17/Drehratenregler 21 anliegen oder von diesen ausgegeben werden (hier: Signal, das am Quadraturregler 17 anliegt), abgegriffen wird und der Rauschanteil extrahiert wird. Somit ist der Störanteil ermittelt. Ein Ausgangssignal der Rauschdetektiereinheit 26 wird dem Ausleseschwingungs-Frequenzregler 27 zugeführt, der in Abhängigkeit davon die Frequenz der Ausleseschwingung so einstellt, dass das Ausgangssignal der Rauschdetektiereinheit 26, d.h. die Stärke des beobachteten Störanteils, minimal wird. Ist ein derartiges Minimum erreicht, so stimmen die Frequenzen von Anregungsschwingung und Ausleseschwingung im Wesentlichen überein.

Bei einem ersten beispielhaften zusätzlichen Verfahren zur elektronischen Abstimmung der Frequenz der Ausleseschwingung auf die Frequenz der Anregungsschwingung in einem Corioliskreisel wird der Resonator des Corioliskreisels mittels einer künstlichen Störkraft so beaufschlagt, dass a) die Anregungsschwingung im Wesentlichen unbeeinflusst bleibt, und b) die Ausleseschwingung so geändert wird, dass ein die Ausleseschwingung repräsentierendes Auslesesignal einen entsprechenden Störanteil enthält, wobei die Frequenz der Ausleseschwingung so geregelt wird, dass die Grösse des in dem Auslesesignal enthaltenden Störanteils möglichst klein wird.

Eine dem ersten beispielhaften zusätzlichen Verfahren zu Grunde liegende wesentliche Erkenntnis ist, dass eine künstliche Änderung der Ausleseschwingung im Drehraten- oder Quadraturkanal umso stärker insbesondere im jeweils dazu orthogonalen Kanal sichtbar ist, je weniger die Frequenz der Ausleseschwingung mit der Frequenz der Anregungsschwingung übereinstimmt. Die "Durchschlagsstärke" einer derartigen Störung auf das Ausleseschwingungs-Abgriffsignal (insbesondere auf den orthogonalen Kanal) ist also ein Mass dafür, wie genau die Frequenz der Ausleseschwingung mit der Frequenz der Anregungsschwingung übereinstimmt. Wenn man also die Frequenz der Ausleseschwingung so regelt, dass die Durchschlagsstärke ein Minimum annimmt, d.h. dass die Grösse des in dem Ausleseschwingungs-Abgriffsignal enthaltenen Störanteils minimal wird, so ist damit gleichzeitig die Frequenz der Ausleseschwingung auf die Frequenz der Anregungsschwingung im Wesentlichen abgestimmt.

Bei einem zweiten beispielhaften zusätzlichen Verfahren zur elektronischen Abstimmung derze Frequenz der Ausleseschwingung auf die Frequenz der Anregungsschwingung in einem Corioliskreisel wird der Resonator des Corioliskreisels mittels einer Störkraft so beaufschlagt, dass a) die Anregungsschwingung im Wesentlichen unbeeinflusst bleibt, und b) die Ausleseschwingung so geändert wird, dass ein die Ausleseschwingung repräsentierendes Auslesesignal einen entsprechenden Störanteil enthält, wobei die Frequenz der Ausleseschwingung so geregelt wird, dass eine Phasenverschiebung zwischen einem Störsignal, das die Störkraft erzeugt, und dem im Auslesesignal enthaltenen Störanteil möglichst klein wird.

Unter "Resonator" wird hierbei das gesamte in Schwingung versetzbare Massensystem (oder ein Teil davon) des Corioliskreisels verstanden - also der mit Bezugsziffer 2 gekennzeichnete Teil des Corioliskreisels.

Eine dem zweiten beispielhaften zusätzlichen Verfahren zu Grunde liegende wesentliche Erkenntnis ist, dass die "Durchlaufzeit" einer Störung, also einer künstlichen Änderung der Ausleseschwingung durch Beaufschlagen des Resonators mit entsprechenden Störkräften, durch den Resonator, d. h. die Zeit, die ab dem Wirken der Störung am Resonator bis zum Abgriff der Störung als Teil des Auslese-signals verstreicht, von der Frequenz der Ausleseschwingung abhängt. Damit ist die Verschiebung zwischen der Phase des Störsignals und der Phase des in dem Auslesesignal enthaltenen Störanteilsignals ein Maß für die Frequenz der Ausleseschwingung. Es lässt sich zeigen, dass die Phasenverschiebung ein Minimum annimmt, wenn die Frequenz der Ausleseschwingung mit der Frequenz der Anregungsschwingung im Wesentlichen übereinstimmt. Wenn man daher die Frequenz der Ausleseschwingung so regelt, dass die Phasenverschiebung ein Minimum annimmt, so ist damit gleichzeitig die Frequenz der Ausieseschwingung auf die Frequenz der Anregungsschwingung im Wesentlichen abgestimmt.

Das erfindungsgemäße Verfahren zur elektronischen Abstimmung der Ausleseschwingungsfrequenz kann mit dem ersten beispielhaften zusätzlichen Verfahren und/oder dem zweiten beispielhaften zusätzlichen Verfahren beliebig kombiniert werden. Beispielsweise ist es möglich, bei Inbetriebnahme des Corioliskreisels das erste beispielhafte zusätzliche Verfahren anzuwenden (schnelles Einschwingverhalten), und anschliessend das erfindungsgemäße Verfahren (langsamer Regelprozess) im eingeschwungenen Betrieb anzuwenden. Konkrete technische Ausgestaltungen sowie weitere Details zu den Verfahren kann der Fachmann den Patentschriften "Verfahren zur elektronischen Abstimmung der Ausleseschwingungsfrequenz eines Corioliskreisels", LTF-190-DE (DE 102 48 733 B4) und LTF-191-DE (DE 102 48 734 B4) desselben Anmelders entnehmen, in denen jeweils das erste beispielhafte zusätzliche Verfahren bzw. das zweite beispielhafte zusätzliche Verfahren beschrieben sind.

## Patentansprüche

1. Verfahren zur elektronischen Abstimmung der Frequenz der Ausleseschwingung auf die Frequenz der Anregungsschwingung in einem rückstellenden Corioliskreisel (1'), **dadurch gekennzeichnet, dass**
- der Resonator (2) des Corioliskreisels (1') mittels einer Störkraft so beauschlagt wird, dass
a) die Anregungsschwingung im Wesentlichen unbeeinflusst bleibt, und
b) die Ausleseschwingung so geändert wird, dass ein die Ausleseschwingung repräsentierendes Auslesesignal einen entsprechenden Störanteil enthält, wobei
- die Störkraft definiert ist als diejenige Kraft, die durch das Signalrauschen im Auslesesignal hervorgerufen wird, und
- die Frequenz der Ausleseschwingung so geregelt wird, dass die Größe des in dem Auslesesignal enthaltenen Störanteils möglichst klein wird.

2. Verfahren nach Anspruch 1, **dadurch gekennzeichnet, dass** das Signalrauschen das Rauschen einer Abgriffselektronik ist.

3. Verfahren nach Anspruch 1 oder 2, **dadurch gekennzeichnet, dass** der Störanteil aus einem Signal ermittelt wird, das an einem Quadraturregler (17) eines Quadraturregelkreises anliegt oder von diesem ausgegeben wird.

4. Verfahren nach Anspruch 1 oder 2, **dadurch gekennzeichnet, dass** der Störanteil aus einem Signal ermittelt wird, das an einem Drehratenregler (21) eines Drehratenregelkreises anliegt oder von diesem ausgegeben wird.

5. Verfahren nach einem der vorstehenden Ansprüche, **dadurch gekennzeichnet, dass** die Frequenzregelung der Ausleseschwingung durch Regelung der Stärke eines elektrischen Felds erfolgt, in dem ein Teil des Resonators (2) des Corioliskreisels (1') schwingt.

6. Corioliskreisel (1') mit:
- einem Resonator (2),
- einer Anregungseinheit (11; 18), durch die der Resonator in Schwingungen versetzbar ist, und
- einer Ausleseeinheit (7, 12; 15, 19), mit der ein die Ausleseschwingung repräsentierendes Auslesesignal erzeugbar ist, und
- einer Einrichtung zur elektronischen Abstimmung der Frequenz der Ausleseschwingung auf die Frequenz der Anregungsschwingung, **gekennzeichnet durch**:
- eine Rauschdetektiereinheit (26), die den Rauschanteil eines Auslesesignals, das die Ausleseschwingung repräsentiert, ermittelt, und
- eine Regeleinheit (27), die die Frequenz der Ausleseschwingung so regelt, dass die Grösse des in dem Auslesesignal enthaltenen Rauschanteils möglichst klein wird.

7. Corioliskreisel (1') nach Anspruch 6, **dadurch gekennzeichnet, dass** die Rauschdetektiereinheit (26) den Rauschanteileil aus einem Signal ermittelt, das an einem Drehratenregler (21) eines Drehratenregelkreises des Corioliskreisels (1') anliegt oder von diesem ausgegeben wird.

8. Corioliskreisel (1') nach Anspruch 6, **dadurch gekennzeichnet, dass** die Rauschdetektiereinheit (26) den Rauschanteil aus einem Signal ermittelt, das an einem Quadraturregler (21) eines Quadraturregelkreises des Corioliskreisels (1') anliegt oder von diesem ausgegeben wird.

## Claims

1. A method for electronic tuning of the frequency of the read oscillation to the frequency of the stimulation oscillation in a resetting Coriolis gyro (1'), wherein
- the resonator (2) of the Coriolis gyro (1') has a disturbance force applied to it such that
a) the stimulation oscillation remains essentially uninfluenced, and
b) the read oscillation is changed such that a read signal which represents the read oscillation contains a corresponding disturbance component, wherein
- the disturbance force is defined as that force which is caused by the signal noise in the read signal, and
- the frequency of the read oscillation is controlled such that the magnitude of the disturbance component which is contained in the read signal is as small as possible.

2. The method as claimed in claim 1, **characterized in that** the signal noise is the noise of tapping electronics.

3. The method as claimed in claim 1 or 2, **characterized in that** the disturbance component is determined from a signal which is applied to a quadrature regulator (17) in a quadrature control loop, or is emitted from it.

4. The method as claimed in claim 1 or 2, **characterized in that** the disturbance component is determined from a signal which is applied to a rotation rate regulator (21) in a rotation rate control loop, or is emitted from it.

5. The method as claimed in one of the preceding claims, **characterized in that** the frequency of the read oscillation is controlled by controlling the intensity of an electrical field in which a part of the resonator (2) of the Coriolis gyro (1') oscillates.

6. A Coriolis gyro (1'), comprising:
- a resonator (2),
- a stimulation unit (11; 1) which causes the resonator to oscillate;
- a read unit (7; 12, 15, 19) which generates a read signal representative of the read oscillation; and
- means for electronic tuning of the frequency of the read oscillation to the frequency of the stimulation oscillation, **characterized by**:
- a noise detection unit (26) which determines the noise component of a read signal which represents the read oscillation, and
- a control unit (27), which controls the frequency of the read oscillation such that the magnitude of the noise component which is contained in the read signal becomes as small as possible.

7. The Coriolis gyro (1') as claimed in claim 6, **characterized in that** the noise detection unit (26) determines the noise component from a signal which is applied to a rotation rate regulator (21) in a rotation rate control loop in the Coriolis gyro (1'), or is emitted from it.

8. The Coriolis gyro (1') as claimed in claim 6, **characterized in that** the noise detection unit (26) determines the noise component from a signal which is applied to a quadrature regulator (21) in a quadrature control loop in the Coriolis gyro (1'), or is emitted from it.

## Revendications

1. Procédé d'accord électronique de la fréquence de l'oscillation de sortie sur la fréquence de l'oscillation d'excitation dans un gyroscope vibrant de remise en position (1'), **caractérisé en ce que**
- le résonateur (2) du gyroscope vibrant (1') est alimenté par une force parasite de sorte que
a) l'oscillation d'excitation demeure sensiblement non influencée et
b) l'oscillation de sortie est modifiée de sorte qu'un signal de sortie représentant l'oscillation de sortie contient une composante parasite correspondante, de telle sorte que
- la force parasite est définie comme cette force qui est provoquée par le bruit de signal dans le signal de sortie, et
- la fréquence de l'oscillation de sortie est régulée de sorte que la grandeur de la composante parasite contenue dans le signal de sortie est la plus faible possible.

2. Procédé selon la revendication 1, **caractérisé en ce que** le bruit de signal est le bruit d'une électronique de prélèvement.

3. Procédé selon la revendication 1 ou 2, **caractérisé en ce que** la composante parasite est obtenue à partir d'un signal qui se trouve dans un régulateur en quadrature (17) d'un circuit de réglage de quadrature ou est délivrée par celui-ci.

4. Procédé selon la revendication 1 ou 2, **caractérisé en ce que** la composante parasite est obtenue à partir d'un signal qui se trouve sur un régulateur de vitesses de rotation (21) d'un circuit de réglage de vitesses de rotation ou est délivrée par celui-ci.

5. Procédé selon une des revendications précédentes, **caractérisé en ce que** la régulation de fréquence de l'oscillation de sortie s'effectue par régulation de l'intensité d'un champ électrique, dans lequel oscille une partie du résonateur (2) du gyroscope vibrant (1').

6. Gyroscope vibrant (1') équipé :
- d'un résonateur (2),
- d'une unité d'excitation (11), par laquelle le résonateur est déplaçable en oscillations, et
- une unité de sortie (7, 12 ; 15, 19), par laquelle le signal de sortie représentant l'oscillation de sortie peut être généré, et
- un dispositif d'accord électronique de la fréquence de l'oscillation de sortie sur la fréquence de l'oscillation d'excitation, **caractérisé par** :
- une unité de détection de bruit (26), qui détecte la composante de bruit d'un signal de sortie, qui représente l'oscillation de sortie, et
- une unité de régulation (27), qui régule la fréquence de l'oscillation de sortie de sorte que la grandeur de la composante parasite contenue dans le signal de sortie est la plus faible possible.

7. Gyroscope vibrant (1') selon la revendication 6, **caractérisé en ce que** l'unité de détection de bruit (26) détecte la composante de bruit à partir d'un signal se trouvant sur un régulateur de vitesses de rotation (21) d'un circuit de réglage de vitesses de rotation du gyroscope vibrant (1') ou est délivrée par celui-ci.

8. Gyroscope vibrant (1') selon la revendication 6, **caractérisé en ce que** l'unité de détection de bruit (26) détecte la composante de bruit à partir d'un signal se trouvant sur un régulateur de quadrature (21) d'un circuit de réglage de quadrature du gyroscope vibrant (1') ou est délivrée par celui-ci.
